# FASCICULE DE BREVET EUROPEEN

(11) **EP 1 004 100 B1**
(45) Date de publication et mention de la délivrance du brevet: **07.05.2003**
(21) Numéro de dépôt: 98942753.9
(22) Date de dépôt: 19.08.1998
(51) Int. Cl.: G07F 7/10

(54) **DISPOSITIF PORTABLE ELECTRONIQUE POUR SYSTEME DE COMMUNICATION SECURISEE, ET PROCEDE D'INITIALISATION DE SES PARAMETRES**
TRAGBARE ELEKTRONISCHE VORRICHTUNG FÜR SYSTEME ZUR GESICHERTEN KOMMUNIKATION UND VERFAHREN ZUR INITIALISIERUNG DER PARAMETER
PORTABLE ELECTRONIC DEVICE FOR SAFE COMMUNICATION SYSTEM, AND METHOD FOR INITIALISING ITS PARAMETERS

(30) Priorité: 21.08.1997 FR 9710548
(43) Date de publication de la demande: 31.05.2000
(73) Titulaire: ACTIVCARD, 92156 Suresnes Cédex (FR)
(72) Inventeur: AUDEBERT, Yves, Louis, Gabriel, F-78290 Croissy-sur-Seine (FR)
(74) Mandataire: Colas, Jean-Pierre
(86) Numéro de dépôt international: FR9801820
(87) Numéro de publication internationale: WO99010848

(56) Documents cités:
- EP-A- 0 173 103
- EP-A- 0 325 506
- EP-A- 0 610 886
- WO-A-93/10509
- WO-A-96/28796
- DE-A- 3 927 270
- GB-A- 2 206 431

## Description

La présente invention est relative d'une manière générale aux systèmes de communication électronique sécurisée et, plus particulièrement, à de tels systèmes dans lesquels des dispositifs portables électroniques sécurisés permettent d'établir une communication avec et/ou d'accéder à une autre unité électronique.

De nombreux systèmes de communication électronique nécessitent de contrôler l'accès des utilisateurs à des applications déterminées, ce contrôle impliquant généralement d'authentifier des personnes et/ou des messages. Tel est le cas notamment lorsqu'il s'agit de contrôler l'accès à un ordinateur ou plus généralement à un réseau informatique dont l'utilisation est réservée à des personnes s'étant dûment légitimées. De tels réseaux peuvent servir, par exemple, à assurer toutes sortes de services impliquant une transaction, le plus souvent à contrepartie économique, tels que le télé-achat, la télévision à péage, la banque à domicile, les jeux télévisés interactifs, etc....

Des systèmes de contrôle d'accès sont notamment décrits dans les documents US-A-3 806 874, US-A-4 601 011, US-A-4 720 860, US-A-4 800 590 et US-A-5 060 263. Les systèmes décrits dans ces documents font appel à un dispositif portable électronique sécurisé qui génère un mot de passe par chiffrement d'une variable. Une unité de vérification effectue le même calcul ou un calcul similaire sur la même ou approximativement la même variable et autorise l'accès à l'application demandée s'il y a concordance entre les mots de passe générés dans le dispositif portable et l'unité de vérification. La variable peut être un nombre aléatoire ou pseudo-aléatoire, ci-après appelé aléa, transmis de l'unité de vérification au dispositif portable, ou bien elle peut être générée indépendamment dans le dispositif portable et l'unité de vérification au moyen, par exemple, d'une horloge et/ou d'un compteur d'événements.

Lorsque le chiffrement mis en oeuvre dans le dispositif portable et l'unité de vérification fait appel à un algorithme symétrique et une clé secrète, par exemple l'algorithme DES (Data Encryption Standard), la sécurité du système repose sur la préservation du caractère secret de la clé stockée à la fois dans le dispositif portable et l'unité de vérification.

Dans certains cas, la clé peut être statique, c'est-à-dire qu'elle conserve la même valeur pendant toute la durée de vie du dispositif portable.

Dans d'autres cas, la clé peut être dynamique, c'est-à-dire qu'elle évolue avec le temps en fonction, par exemple, du contenu d'un compteur incrémenté par un signal d'horloge et/ou d'un compteur d'événements.

Que la clé soit statique ou dynamique, elle doit présenter initialement, c'est-à-dire lors de la personnalisation du dispositif, une valeur déterminée qui est stockée à la fois dans le dispositif portable électronique et dans une base de données associée à l'unité de vérification. Lorsqu'un utilisateur effectue une demande d'accès, il doit d'une manière ou d'une autre, par exemple au moyen d'un numéro d'identification public ou d'un numéro d'identification personnelle (PIN), s'identifier auprès de l'unité de vérification qui obtient de la base de données la clé statique ou, s'il s'agit d'une clé dynamique, les informations éventuellement nécessaires pour calculer la clé en cours.

Les problèmes de sécurité se posent dans les mêmes termes dans les systèmes de communication électronique sécurisée à dispositifs portables électroniques et unité(s) de vérification qui font appel à un chiffrement et au déchiffrement par algorithme asymétrique à clé(s) publique(s) et clé(s) privée(s). Suivant les mécanismes mis en oeuvre au moyen d'un tel algorithme (authentification, signature, etc.....) le caractère secret d'une ou plusieurs des clés stockées dans les dispositifs et/ou les unités de vérification doit en effet être conservé.

Lors du processus de personnalisation cette ou ces clés et d'autres données de personnalisation secrètes sont chargées en mémoire dans le dispositif par l'entité qui livre le dispositif à l'utilisateur final. Afin de protéger ces données de personnalisation, il est connu, notamment par le document WO 93/10509, de permettre au fournisseur d'une carte à mémoire de substituer une nouvelle clé maître d'accès aux données de personnalisation à la clé initiale qui a été implantée par le fabricant de la carte.

Il est également connu par le document EP-A-0 173 103 de stocker des données secrètes d'identification d'une carte à puce dans une mémoire de celle-ci. Lorsqu'une carte est livrée à un fournisseur par le fabricant, un pli cacheté sur lequel est imprimée une donnée de clé maître PMK est envoyé séparément au fournisseur par le fabricant. La donnée PMK est introduite dans la carte à puce où elle est comparée avec une donnée PMK stockée dans celle-ci. L'introduction d'un numéro de compte primaire PAN dans la carte n'est autorisé que s'il y a concordance. Un numéro d'identification personnel initial IPIN est envoyé sous pli cacheté par le fournisseur à l'utilisateur de la carte. Au niveau de l'utilisateur, la donnée IPIN qu'il a reçue et une donnée IPIN stockée dans la carte sont comparées. L'enregistrement du numéro d'identification personnel de la carte à puce ne peut être obtenu que s'il y a coïncidence.

Par ailleurs, le grand développement que connaissent les systèmes de communication électronique sécurisée conduit à concevoir des produits permettant la mise en oeuvre de plusieurs applications différentes et présentant plusieurs niveaux de sécurité pour une même application. Le problème qui se pose alors est de garantir l'indépendance des applications et des niveaux de sécurité associés, c'est-à-dire des différentes fonctions mises en oeuvre par le dispositif.

L'invention a entre autres buts de fournir un dispositif portable électronique sécurisé de communication avec une autre unité électronique qui permette d'assurer une telle indépendance des fonctions.

Conformément à l'invention, ce but est atteint au moyen d'un dispositif portable électronique sécurisé de communication tel que défini dans la revendication 1 et les sous-revendications 2 à 12.

L'invention a également pour objet, conformément à la revendication 13 et aux sous-revendications 14 à18, un procédé d'initialisation d'un tel dispositif portable électronique sécurisé de communication.

L'invention a encore pour objet un système de communication sécurisée comprenant un ensemble de dispositifs portables électroniques sécurisés de communication tels que définis ci-dessus et au moins un outil d'initialisation de paramètres de personnalisation pour le chargement dans chacun desdits dispositifs
* de données de personnalisation communes aux différentes fonctions dudit dispositif,
* desdites données de personnalisation particulières et
* desdites données secrètes particulières.

Selon une caractéristique de l'invention, ledit système comprend en outre un outil d'initialisation de paramètres de production pour le chargement initial dans chacun desdits dispositifs d'une donnée secrète reprogrammable spécifique à chaque dispositif et représentative dudit code secret d'accès en personnalisation spécifique.

Enfin, l'invention a pour objet un système de communication sécurisée comprenant un ensemble de dispositifs comportant des moyens tels que définis ci-dessus pour la mise en oeuvre de mécanismes d'authentification et au moins une unité de vérification.

D'autres caractéristiques et avantages de l'invention résulteront de la description qui va suivre de modes de réalisation donnés à titre d'exemple et illustrés par les dessins annexés sur lesquels :
la figure 1 est un schéma général d'un système de communication sécurisée selon l'invention appliqué au contrôle d'accès ;
la figure 2 est un diagramme illustrant les mécanismes d'initialisation en production des paramètres du dispositif portable électronique faisant partie du système de la figure 1 ;
la figure 3 est un diagramme illustrant une variante des mécanismes d'initialisation en production des paramètres du dispositif portable électronique faisant partie du système de la figure 1 ;
la figure 4 est un diagramme illustrant les mécanismes d'initialisation des paramètres de personnalisation du dispositif portable d'électronique faisant partie du système de la figure 1 ; et
la figure 5 est un organigramme général illustrant sous forme synthétique les différentes phases d'initialisation du dispositif portable électronique faisant partie du système de la figure 1.

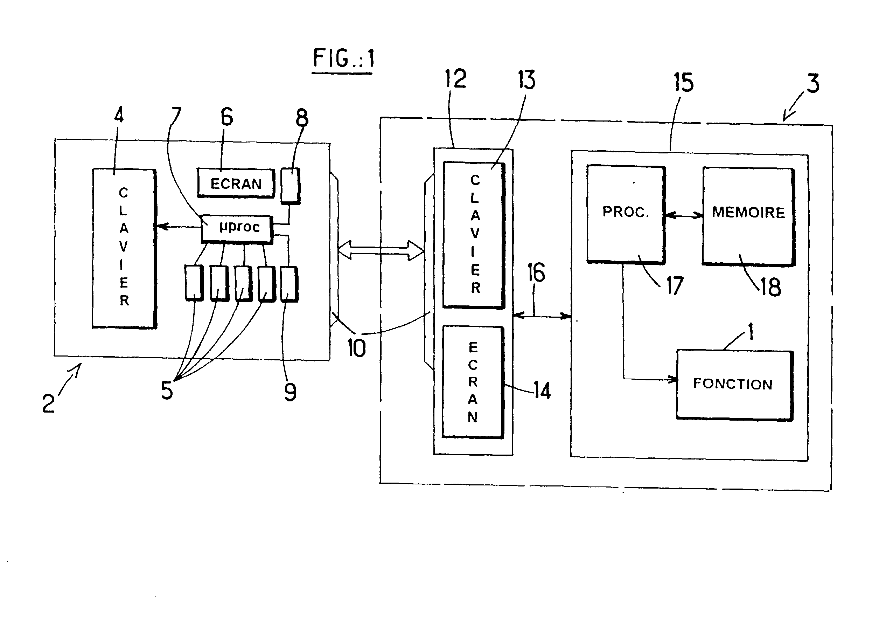

Le système de contrôle d'accès représenté à la figure 1 est supposé donner un accès conditionnel à une application qui est symbolisée par le rectangle 1. Le terme "application" doit être pris dans une acception très large. Il désigne toute application à laquelle l'accès est conditionné par une autorisation faisant intervenir une authentification impliquant une vérification du dispositif (carte) à l'aide duquel la demande est formulée, et de préférence également une identification de la personne demandant l'accès à l'application pour savoir si sa demande est légitime.

L'application peut être de toute nature, par exemple le contrôle d'accès à un local, à un réseau informatique ou à un ordinateur, la mise en oeuvre d'une transaction pécuniaire ou autre (télé-achat, banque à domicile, jeux télévisés inter-actifs, télévision à péage ), etc... Par ailleurs, l'authentification de personnes et/ou de messages (signature électronique) tombe expressément dans la portée de la présente invention.

Selon l'exemple de réalisation illustré à la figure 1, le système de contrôle d'accès comprend une première unité ou dispositif portable 2 également appelé ci-après "carte" et au moins une seconde unité de vérification 3. Le système de contrôle d'accès selon l'invention peut comporter un grande nombre de cartes 2 et une ou plusieurs unités de vérification 3, mais en tout cas en un nombre généralement plus faible. Les nombres des cartes 2 et des unités 3 ne sont nullement limitatifs de l'invention.

La carte 2 se présente par exemple sous la forme d'une calculette ou d'une carte de crédit et elle comporte un clavier 4 destiné à permettre l'introduction d'informations, telles que par exemple un numéro d'identification personnel PIN, ainsi que diverses touches de fonction 5. Elle comporte également un écran d'affichage 6, par exemple à cristaux liquides, et est dotée d'un circuit électronique intégré comportant un microcontrôleur programmé 7 ainsi qu'une mémoire morte permanente 8 de type ROM et une mémoire reprogrammable 9 constituée par de la mémoire RAM et éventuellement de la mémoire EEPROM. La mémoire permanente 8 et la mémoire reprogrammable 9 sont inaccessibles de l'extérieur de la carte et les bus de données et d'adresses du micrucontrôleur 7 sont également inaccessibles de l'extérieur de manière à rendre impossible une lecture ou une modification frauduleuse, depuis l'extérieur, des informations contenues dans les mémoires 8 et 9.

La zone mémoire permanente 8 (ROM) comprend une zone programme et une zone donnée.

La zone programme comprend des instructions de programme relatives à la mise en oeuvre des mécanismes suivants :
1. les mécanismes de sécurité
   - identification du porteur
   - authentification du porteur vis-à-vis de l'unité de vérification
   - authentification de l'unité de vérification et de l'unité de personnalisation
   - authentification de message
   - chiffrement/déchiffrement
   - éventuellement signature électronique
   - ..........
2. les mécanismes de personnalisation
   - lors de la fabrication
   - lors des différentes personnalisations chez le ou les clients
3. les mécanismes relatifs à la ou aux applications de la carte
4. les mécanismes de communication
   - communication avec l'utilisateur : affichage, clavier,
   - communication avec l'unité de vérification ou de personnalisation
      * infrarouge
      * DTMF
      * communication avec un lecteur
   - communication avec une carte à puce
   - etc.....

La zone donnée comprend les données communes à un masque de fabrication :
1. clé ROM (K_{ROM})
2. le numéro de version du logiciel
3. etc.....

La zone mémoire reprogrammable 9 de type RAM et éventuellement EEPROM stocke les informations décrits ci-après :

### 1. Les données introduites lors des différentes phases d'initialisation des paramètres de production et des paramètres de personnalisation :

Ces données sont structurées selon les niveaux de sécurité et selon les applications, la modification d'une zone de données est conditionnée par l'authentification de l'entité demandeur de la personnalisation : code d'accès fonction d'un aléa généré par la carte, signature, .....

Ces données peuvent être secrètes (clés secrètes) ou être consultables mais non modifiables, il s'agit de :
* clés secrètes de personnalisation
* clés secrètes relatives aux mécanismes de sécurité : authentification d'entité, authentification de message, génération d'aléas,
* données relatives à l'application : contenu des messages, types de mécanismes de sécurité requis,.....
* données relatives à l'exploitation de la carte dans une application donnée : longueur exigée pour le numéro d'identification personnel (PIN), longueur de l'aléa, format du code d'accès,.....
* données communes à toutes les applications : valeur du PIN, valeur de l'horloge, valeur des compteurs, contenu des messages standards.

### 2. Les données de travail

La carte 2 comporte également un dispositif de communication 10 permettant de communiquer avec l'unité de vérification 3, ou bien avec un outil de fabrication ou un outil de personnalisation comme cela sera décrit dans la suite, soit directement, soit par une liaison de transmission à plus ou moins longue distance. Ce dispositif de communication 10 peut se présenter sous de nombreux aspects, par exemple une liaison câblée bidirectionnelle, une liaison téléphonique bidirectionnelle en DTMF, une liaison bidirectionnelle par rayons infrarouges, une liaison bidirectionnelle dite "en mode connecté" dans lequel la carte est insérée dans un lecteur approprié, des moyens de réception optique associés, dans l'unité 3, à des moyens de lecture d'informations affichées sur l'écran 6 comme décrit par exemple dans le document EP-A-0 399 897, ou tout autre dispositif de transmission bien connu dans la technique.

Enfin, une source d'énergie électrique (non représentée), par exemple une pile électrique de dimensions réduites, est prévue pour alimenter les divers circuits de la carte 2 et permettre son fonctionnement autonome.

L'unité 3 englobe tout d'abord des moyens d'interface permettant d'assurer la communication avec la carte 2 au moyen du dispositif de communication 10. Ces moyens d'interface, symbolisés par un rectangle 12, peuvent se présenter sous de nombreuses formes. Il peut s'agir par exemple d'un lecteur dédié, mais il peut s'agir également d'un terminal d'ordinateur, d'un ordinateur personnel inséré par exemple dans un réseau, etc... La particularité de ces moyens d'interface 12 est qu'ils permettent d'assurer la communication avec la ou les cartes 2 qui leur sont associées via le dispositif de communication 10.

Les moyens d'interface 12 peuvent comprendre également un clavier 13 et un écran d'affichage 14 pour permettre à un utilisateur d'introduire des informations à communiquer à une partie 15 de l'unité 3, telles que par exemple des mots de passe ou des données à authentifier relatives à l'application 1. Toutefois, l'introduction de ces données peut être réalisée d'autres manières, notamment automatiquement sans intervention manuelle de l'utilisateur, par exemple par la simple introduction de la carte 2 dans l'interface 12 ou par émission de rayons infrarouges modulés commandée au moyen de l'une des touches de fonction 5.

L'interface 12 communique avec la partie 15 de l'unité 3 que l'on appellera "serveur". Cette communication symbolisée par la connexion 16 peut se faire à courte ou à longue distance par tout moyen approprié. Les informations circulant sur cette connexion sont notamment le mot de passe à contrôler dans le serveur 15 et éventuellement des données à authentifier et à exploiter dans le serveur.

Le serveur 15 comporte en particulier un processeur 17 et une mémoire 18. Le processeur 17 est capable de libérer conditionnellement les applications 1, visées par les demandes d'accès formulées par les cartes 2.

Le microcontrôleur 7 de la carte 2 est programmé pour assurer, en liaison avec l'unité de vérification 3, la sécurité de communications au sens large, par exemple l'authentification d'un utilisateur muni de la carte 2, la certification de messages, la sécurisation de transactions, etc... Ces mécanismes d'authentification, de certification, etc... sont bien connus des spécialistes de la technique et ils ne seront pas décrits en détail dans la présente demande. Ces mécanismes font appel au chiffrement et/ou au déchiffrement dans la carte 2 et/ou dans l'unité 3 d'une ou plusieurs informations par un algorithme à clé publique et clé privée ou d'un algorithme à clé secrète, clés qui sont stockées dans la mémoire programmable 9 associée au microcontrôleur 7 et/ou dans la mémoire 18 du "serveur" 15.

Dans la description qui va suivre, l'invention met en oeuvre des algorithmes à clé secrète, mais il doit être compris qu'elle n'est nullement limitée à ce type d'algorithme.

C'est ainsi, par exemple, qu'une procédure d'authentification au moyen d'un algorithme à clé secrète consiste, après que l'utilisateur se soit identifié auprès de l'unité de vérification, à chiffrer une variable parallèlement dans la carte 2 et dans l'unité de vérification 3 au moyen de cet algorithme et d'une clé secrète partagée K_{SEA} et à comparer ensuite, généralement dans l'unité de vérification 3, les deux mots de passe A_{SEA} résultant du chiffrement de cette variable. Dans les systèmes dits asynchrones, cette variable est un nombre aléatoire généré par l'unité de vérification 3 et transmis à la carte 2. Dans les systèmes dits synchrones, cette variable est dynamique, c'est-à-dire qu'il s'agit d'un nombre qui, dans la carte 2 et l'unité 3, évolue dans le temps en fonction du contenu d'un compteur d'horloge et/ou d'un compteur d'événements. Les systèmes synchrones supposent, à certaines tolérances près, une concordance entre les contenus des compteurs d'horloge et/ou d'événements de la carte 2 et le contenu, à l'adresse associée à la carte 2, d'une base de données faisant partie de l'unité de vérification 3 ou à laquelle celle-ci a accès pour la mise en oeuvre du processus d'authentification. Des exemples détaillés de ces mécanismes d'authentification sont donnés, par exemple, dans le document EP-A-0 338 936 et dans la demande de brevet français No. 96 04797 déposée le 17 Avril 1996 (FR-A-2747814) auxquels on pourra se reporter.

Comme indiqué précédemment, la ou les clés secrètes de chiffrement et/ou de déchiffrement mémorisées dans la carte 2 et le serveur 15 peuvent être statiques, c'est-à-dire qu'elles conservent la même valeur pendant toute la durée du produit, ou dynamiques, c'est-à-dire que leur valeur évolue avec le temps. La valeur des clés dynamiques peut elle-même être une fonction du contenu de compteurs d'horloge et/ou d'événements comme décrit par exemple dans la demande de brevet français No. 96 04798 déposée le 17 Avril 1996 (FR-A-2747815).

Qu'il s'agisse d'une clé statique ou d'une clé dynamique, il est nécessaire lors de la phase d'initialisation des paramètres de production ou des paramètres de personnalisation de la carte 2 de charger dans la mémoire programmable 9 de celle-ci une valeur initiale qui constituera la clé statique, la clé dynamique initiale ou une racine permettant de calculer la clé dynamique initiale. Dans un système comportant un grand nombre de cartes, par exemple plusieurs milliers à plusieurs dizaines de milliers, la gestion d'une ou plusieurs clés secrètes propre à chaque carte et différentes chacune de celles de toutes les autres cartes pose des problèmes de sécurité. Il est en effet souhaitable que l'utilisateur final de la carte soit assuré que la sécurité offerte par celle-ci ne risque pas d'être mise en cause par suite des opérations de programmation mises en oeuvre en amont par la ou les entités chargées de l'initialisation des paramètres de production et/ou des paramètres de personnalisation de la carte.

Ces problèmes de sécurité sont encore accentués par les développements actuels des systèmes de communication sécurisée qui doivent être en mesure de répondre aux besoins liés à la multiplicité des applications et à la multiplicité des niveaux de sécurité pour une application. C'est ainsi, par exemple, que pour un système de sécurité de configuration donnée, c'est-à-dire un ensemble de cartes et les logiciels associés implantés dans les cartes 2 et les unités de vérification 3 en vue d'assurer des fonctionnalités déterminées, une même carte peut être utilisée pour différentes applications, par exemple l'authentification auprès d'un réseau informatique ou similaire pour accéder à une ou plusieurs ressources de ce réseau (l'accès à chaque ressource pouvant nécessiter une authentification distincte), le télé-achat, etc... De plus, pour une même application, il peut être prévu plusieurs niveaux de sécurité, par exemple suivant des catégories d'utilisateurs, de sorte que les cartes devront être personnalisées en fonction des utilisateurs finaux de celles-ci.

La multiplicité des applications pour un même système de sécurité et des niveaux de sécurité pour une même application, combinée aux différentes phases de vie que connaît le système entre sa fabrication et sa livraison à l'utilisateur final, font qu'il peut y avoir pour un même système, simultanément ou non, plusieurs gestionnaires ou administrateurs responsables de la gestion des problèmes de sécurité.

Si l'on considère un cas simple où le système de sécurité ne comporte qu'une seule application, une carte peut, durant son cycle de vie, circuler entre un certain nombre d'entités, à savoir :
- le fabricant ou le fournisseur qui vend le système de sécurité au client ;
- un administrateur général, qui peut être le responsable sécurité du client, lequel peut avoir plusieurs sites géographiques, chaque site possédant sa propre organisation de gestion du système de sécurité qui est indépendante de celle des autres sites ;
- des administrateurs locaux responsables chacun de l'organisation du système de sécurité de l'entreprise au niveau d'un site géographique ; et
- les utilisateurs finaux qui seront chacun détenteur d'une carte 2 et qui utiliseront celle-ci au niveau d'un ou plusieurs sites géographiques déterminés.

La gestion d'un tel système de sécurité suppose, une fois qu'un lot de cartes a été vendu à un client par le fournisseur ou le fabricant, que seul l'administrateur général puisse utiliser ce lot de cartes et qu'un autre client ne puisse pas les utiliser. Il faut donc :
- d'une part que le fabricant ou le fournisseur initialise en production un certain nombre de paramètres communs à un lot de cartes destiné à un client donné qui seul pourra initialiser ses paramètres de personnalisation dans les cartes ;
- d'autre part assurer le caractère irréversible de l'opération de personnalisation par le client : une fois que l'administrateur général a personnalisé les cartes, ces dernières ne doivent plus pouvoir être utilisées par le fournisseur ou le fabricant.

Une fois en possession du lot de cartes, l'administrateur général va initialiser dans les cartes tous les paramètres de personnalisation communs à tous les sites. Les cartes seront ensuite réparties sur plusieurs sites sur chacun desquels un administrateur local initialisera les paramètres de personnalisation propres au site concerné. Si des cartes doivent pouvoir être utilisées et reconnues sur plusieurs sites, elles seront données à un premier administrateur local pour être initialisées des paramètres de personnalisation du premier site, puis à un deuxième administrateur local pour être initialisées des paramètres de personnalisation du deuxième site, etc... Dans ce contexte, il sera nécessaire d'assurer l'indépendance des moyens de gestion c'est-à-dire que:
- un administrateur local X ne pourra initialiser que les paramètres de personnalisation du site X : le fait de pouvoir initialiser les paramètres de personnalisation du site X n'entraîne pas la possibilité d'initialiser les paramètres de personnalisation du site Y, ni de connaître les paramètres de personnalisation du site Y ;
- le fait d'être administrateur général n'entraîne pas la connaissance des paramètres de personnalisation des différents sites, ceci afin d'assurer l'indépendance de la gestion au niveau de chaque site.

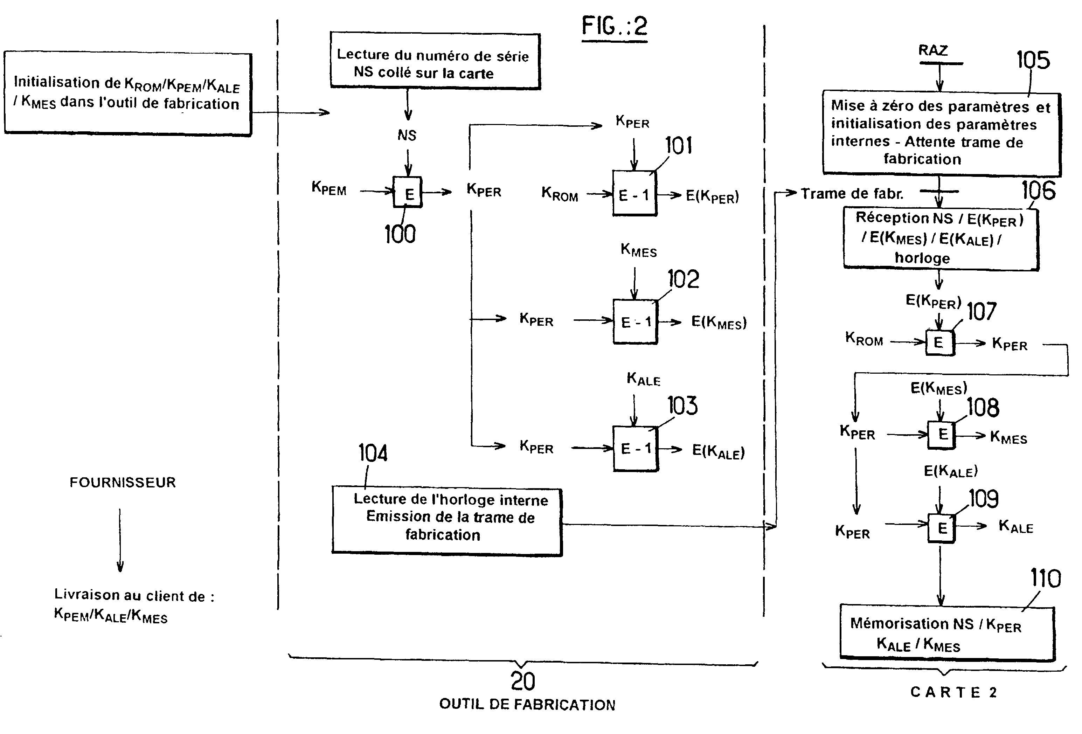

Ces différentes fonctionnalités sont mises en oeuvre au moyen de mécanismes d'initialisation des paramètres de production et des paramètres de personnalisation qui seront maintenant décrits en se reportant aux figures 2 à 4.

La figure 2 est un diagramme illustrant les mécanismes d'initialisation en production des données ou paramètres, ci-après appelés paramètres de production, qui sont communs à un lot de cartes destiné à un client donné. Sur cette figure, la colonne de gauche montre les opérations effectuées par le fournisseur de la carte, c'est-à-dire l'entité qui est responsable de la fourniture du système de sécurité au client. La colonne du milieu illustre les opérations qui sont mises en oeuvre par un outil 20 de fabrication des cartes 2, le fabricant pouvant ou non être la même entité que le fournisseur. Enfin, la colonne de droite illustre les opérations qui sont mises en oeuvre dans la carte 2. L'outil de fabrication 20 utilisé par le fabricant comprend des moyens matériels et logiciels conventionnels qu'il n'y a pas lieu de décrire ici et qui permettent, entre autres, d'élaborer un certain nombre de données et de les transmettre aux cartes 2 pour en programmer la mémoire programmable 9.

Dans la colonne de gauche de la figure 2 apparaissent un certain nombre de clés secrètes K_{ROM}, K_{PEM}, K_{ALE} et K_{MES} qui sont communes à un lot de cartes destinées à un client donné.

La clé K_{ROM} est définie par le fournisseur et elle est connue de lui seul. Cette clé K_{ROM} est implantée dans la mémoire morte permanente 8 des cartes lors du masquage des circuits intégrés, mais elle n'est pas connue du fabricant des cartes 2 si celui-ci n'est pas la même entité que le fournisseur. A cet effet, elle peut par exemple être noyée sous forme chiffrée dans le logiciel de pilotage de l'outil de fabrication des cartes.

Les clés K_{PEM}, K_{ALE} et K_{MES} sont également choisies par le fournisseur et introduites sous forme chiffrée par celui-ci dans le logiciel de pilotage de l'outil de fabrication. Les valeurs de ces trois clés sont communiquées confidentiellement au client, de préférence séparément du lot de cartes qui lui est destiné. La clé K_{PEM} est une clé maître de personnalisation qui, comme cela sera décrit dans la suite, permet de générer une clé de personnalisation propre à chaque carte en fonction de son numéro de série. La clé K_{ALE} est une clé permettant aux cartes de générer des aléas et la clé K_{MES} est une clé qui permet de charger un alphabet et des messages dans les cartes.

Comme représenté sur la colonne centrale de la figure 2, le numéro de série NS associé à une carte donnée est lu par l'outil de fabrication 20 et ce numéro NS est soumis par un algorithme à une opération de chiffrement E à l'aide de la clé maître de personnalisation K_{PEM} (bloc 100). Le résultat de ce chiffrement est une clé de personnalisation spécifique propre à la carte, K_{PER} qui est soumise en 101 au moyen d'un algorithme et de la clé K_{ROM} à une opération inverse E-1 pour produire une donnée E(K_{PER}). La clé K_{PER} est utilisée en 102 et 103 pour générer des données E(K_{MES}) et E(_{KALE}), à partir des clés K_{MES} et K_{ALE} respectivement, grâce à l'opération inverse E-1. Dans ce qui précède et ce qui suit, si B = E[K_{X}](A) est le résultat du chiffrement E d'une donnée A à l'aide d'une clé Kₓ, E-1 représente l'opération inverse A = E - 1[K_{X}](B) permettant, au moyen de la clé K_{X}, d'obtenir en sortie la donnée A en appliquant à l'entrée de l'algorithme de chiffrement la donnée B.

Pour une carte donnée 2, les paramètres de production (bloc 104) comprennent le numéro de série NS, les données de sortie des blocs 101, 102 et 103, et l'état d'un compteur d'horloge interne de l'outil de fabrication permettant d'initialiser un compteur d'horloge de la carte 2, en particulier si le système met en oeuvre des variables et/ou des clés dynamiques.

Après mise à zéro des paramètres et initialisation des paramètres internes de la carte concernée 2, celle-ci est mise dans un état d'attente de réception d'une trame de fabrication (bloc 105). A l'étape 106, la carte 2 reçoit la trame de fabrication constituée des données énumérés précédemment (bloc 104). Au moyen du logiciel qui lui a été programmé, le microcontrôleur 7 calcule ensuite en 107 par l'opération E la clé K_{PER} à partir de la donnée E(K_{PER}) et de la clé K_{ROM}. Il calcule également par l'opération E, en 108 la clé K_{MES} à partir de la donnée E(K_{MES}) et de la clé K_{PER}, et en 109 la clé K_{ALE} à partir de la donnée E(K_{ALE}) et de la clé K_{PER}.

A l'étape 110, le numéro de série NS et les clés K_{PER}, K_{ALE} et K_{MES}, sont stockées en mémoire et la carte est prête à être transmise à un client en vue de sa personnalisation.

Dans le processus décrit ci-dessus, il suffit de connaître le format de la trame de fabrication (bloc 104) pour charger des paramètres dans une carte puisque cette opération ne fait pas appel à un code d'accès. Mais un pirate qui connaîtrait le format de cette trame de fabrication serait néanmoins dans l'impossibilité de personnaliser et d'exploiter cette carte car il ne connaîtrait pas la clé K_{ROM}.

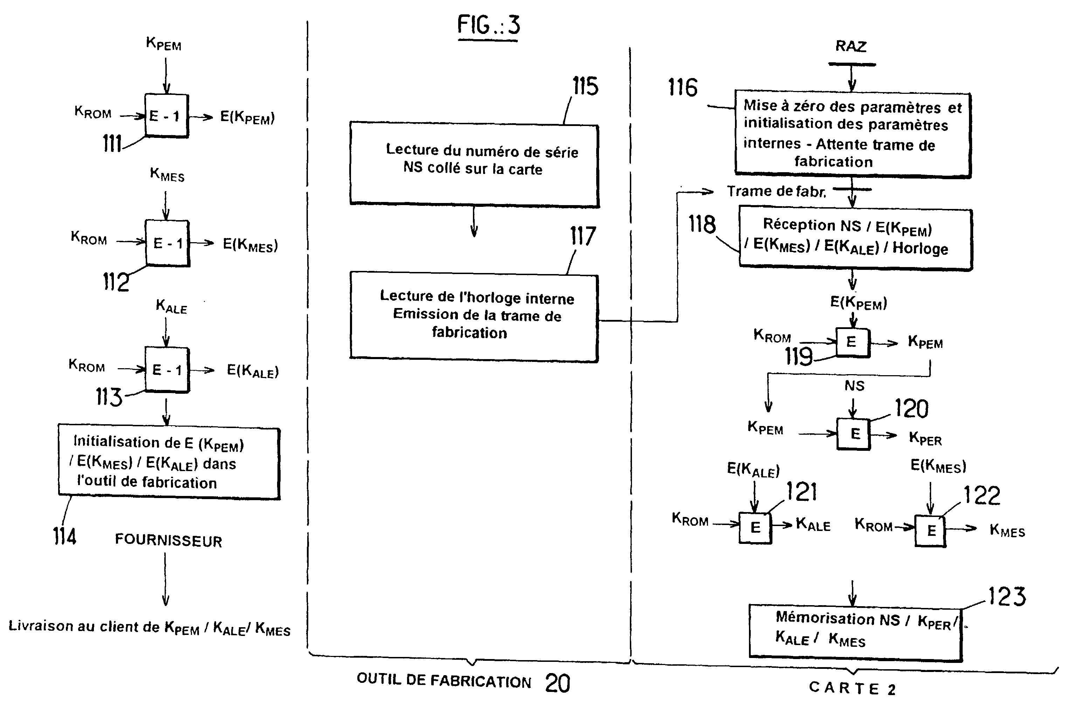

La figure 3 décrit une variante de réalisation du processus d'initialisation des paramètres de production qui a pour avantage de ne pas introduire la clé K_{ROM} et la clé K_{PEM} dans le logiciel d'initialisation des paramètres de production de l'outil de fabrication 20. A cet effet, au moyen d'un logiciel qui lui est propre, le fournisseur (colonne de gauche) calcule les données E(K_{PER}), E(K_{MES}) et E(K_{ALE}) à partir, respectivement, des données K_{PER}, K_{MES} et K_{ALE}, et de la clé K_{ROM}. Après le calcul de ces données en 111, 112 et 113 par une opération E-1, celles-ci sont introduites par le fournisseur dans le logiciel d'initialisation des paramètres de production de l'outil de fabrication (étape 114).

Après lecture du numéro de série de la carte concernée par l'outil 20 en 115, et après mise à zéro des paramètres et initialisation des paramètres internes de la carte en 116, l'outil de fabrication 20 transmet les paramètres de production à la carte (étape 117) : il s'agit du numéro de série NS, des données E-1( K_{PER}), E-1(K_{MES}) et E-1(K_{ALE}), ainsi que de l'état du compteur d'horloge interne. Après réception de la trame correspondante (étape 118), le microcontrôleur 6 calcule par l'opération E la clé K_{PEM} à l'aide de la donnée E(K_{PEM}) et de la clé K_{ROM} (étape 119). Il calcule ensuite la clé de personnalisation propre à la carte, K_{PER}, par l'opération E au moyen de la donnée NS et de la clé maître de personnalisation K_{PEM} (étape 120). Enfin, le microcontrôleur 7 calcule en 121 et 122 par l'opération E les clés K_{ALE} et K_{MES} à partir des données E(K_{ALE}) et E(K_{MES}) respectivement et de la clé K_{ROM} stockée dans la mémoire permanente 8 de la carte. A l'étape 123, les données NS, K_{PER}, K_{ALE} et K_{MES} sont stockées dans la mémoire programmable 9 de la carte 2. Ces données sont les mêmes que celles obtenues par le processus d'initialisation des paramètres de production décrits en regard de la figure 2.

Lorsque les paramètres de production d'un lot de cartes destinées à un client donné ont ainsi été initialisés, celles-ci sont livrées au client. Les clés communes à ce lot, à savoir la clé maître de personnalisation K_{PEM}, la clé permettant de générer des aléas K_{ALE} et la clé permettant de charger l'alphabet et des messages, à savoir K_{MES}, sont communiquées confidentiellement au client. Chaque carte contient en mémoire les clés K_{ALE} et K_{MES} qui sont communes à ce lot de cartes, ainsi que la clé K_{PER} et le numéro de série NS qui lui sont propres.

En outre, chaque carte 2 contient en mémoire un code ou numéro permettant d'identifier la version du logiciel qui a été implantée, lors de leur masquage, dans les circuits intégrés de cette carte. En effet, d'un lot de cartes à un autre, la version de logiciel implantée peut être différente et, à l'intérieur d'un même lot de carte destiné à un client, il peut éventuellement y avoir plusieurs groupes de cartes équipées de versions différentes de logiciel en fonction des besoins exprimés par le client quant à l'utilisation de ces cartes. Le code ou numéro de chaque version du logiciel implanté dans les cartes qui lui sont livrées est fourni par le fournisseur au client. Ce dernier dispose également du ou des logiciels nécessaires à la personnalisation de ses cartes en fonction de la version du logiciel implanté dans celles-ci.

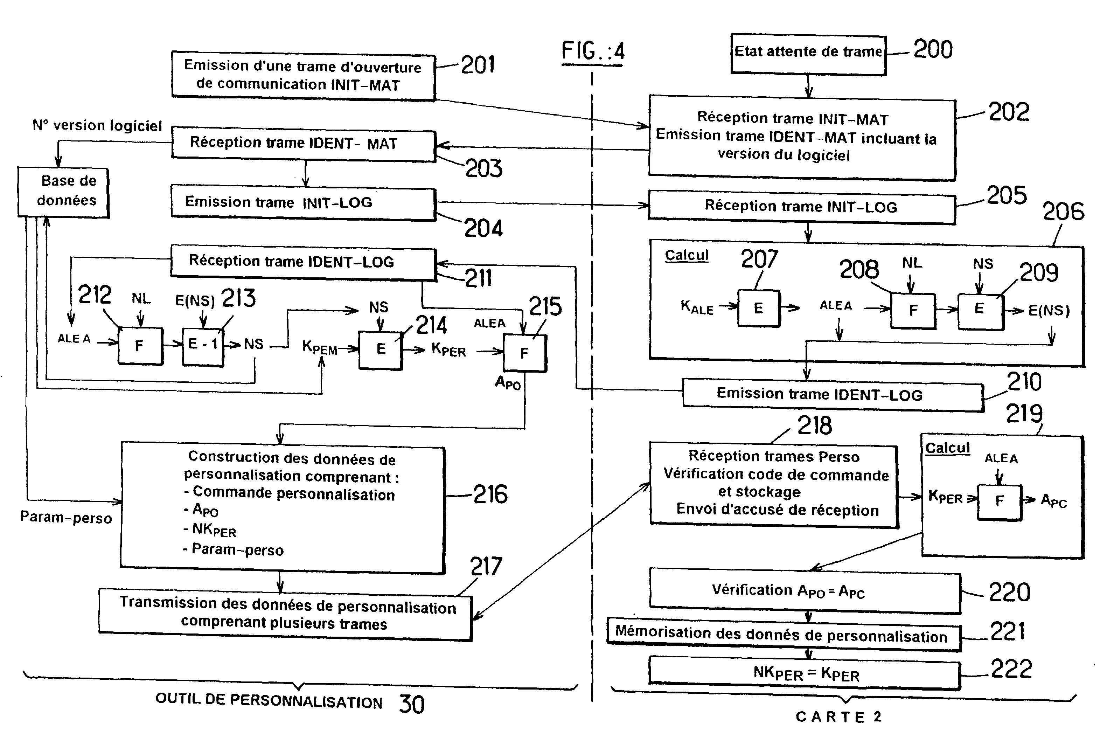

Le processus de personnalisation des cartes 2 par le client est illustré à la figure 4 sur laquelle la colonne de gauche représente les opérations mises en oeuvre par un outil de personnalisation 30 et la colonne de droite les opérations mises en oeuvre dans les cartes 2. L'outil de personnalisation 30 présente une structure similaire à celui de l'unité de vérification 3, c'est-à-dire qu'il comporte des moyens de communication avec les cartes 2, un processeur de traitement d'informations, des mémoires contenant notamment le ou les logiciels nécessaires à la personnalisation des cartes en fonction de la version du logiciel implanté dans celles-ci, et une base de données contenant les valeurs des clés K_{PEM}, K_{ALE} et K_{MES} et les paramètres de personnalisation à charger dans les cartes 2 en fonction de la version du logiciel implanté dans celles-ci.

Sur la figure 4, à l'étape 200, la carte est dans un état d'attente d'une trame d'ouverture de communication en provenance de l'outil de personnalisation. A l'étape 201, l'outil de personnalisation ouvre la communication avec la carte à personnaliser et émet la trame d'ouverture de communication INIT-MAT. A l'étape 202, la carte reçoit la trame d'ouverture de communication INIT-MAT et émet vers l'outil de personnalisation une trame d'identification IDENT-MAT incluant le code ou numéro de la version du logiciel qu'elle contient. A l'étape 203, l'outil de personnalisation 30 reçoit la trame d'identification IDENT-MAT et le numéro de version de logiciel est appliqué à la base de données pour y lire, entre autres, les paramètres de personnalisation à charger dans la carte. A l'étape 204, l'outil de personnalisation 30 émet une trame d'initialisation logicielle INIT-LOG reçue en 205 par la carte, qui passe alors à l'étape 206.

A l'étape 206, la carte calcule par l'opération E un aléa au moyen de la clé K_{ALE} (bloc 207), puis la donnée E(NS) par chiffrement du numéro de série NS de la carte au moyen d'une clé qui est elle-même le résultat du chiffrement par une fonction logique F du numéro de version du logiciel NL au moyen de l'aléa calculé en 207. Après ces opérations de chiffrement 208 et 209, la carte émet en 210 une trame d'identification IDENT-LOG contenant l'aléa et E(NS). Cette trame est reçue en 211 par l'outil de personnalisation 30 qui, par une opération F en 212 sur le numéro NL au moyen de l'aléa transmis depuis la carte et une opération E-1 en 213 sur E(NS) au moyen du résultat de l'opération effectuée en 212, génère le numéro de série NS de la carte. Le numéro de série NS de la carte en cours de personnalisation est appliqué à la base de données afin de permettre au client de garder une table des données de personnalisation de chaque carte. En 214, l'outil de personnalisation calcule la clé K_{PER} propre à la carte par une opération de chiffrement E du numéro de série NS au moyen de la clé maître de personnalisation K_{PEM} qui est fournie par la base de données de l'outil 30 L'outil calcule ensuite en 215 un mot de passe d'authentification A_{PO} (qui constitue le code d'accès à la personnalisation de la carte) par chiffrement F de l'aléa au moyen de la clé K_{PER} : A_{PO} = F [K_{PER}] (Aléa).

A l'étape 216, l'outil de personnalisation construit les données de personnalisation communes de la carte à partir du mot de passe calculé en 215 et des paramètres de personnalisation reçus de la base de données. Ces données de personnalisation communes comprennent des codes de commande de personnalisation, le mot de passe A_{PO} d'authentification de l'outil de personnalisation, une nouvelle clé secrète de personnalisation propre à la carte NK_{PER} destinée à être substituée à la clé de personnalisation initiale K_{PER} et les différents paramètres de personnalisation comprenant, par exemple, une ou des clés secrètes K_{SEA} de calcul du mot de passe d'authentification A_{SEA} vis-à-vis de l'unité de vérification 3 (A_{PEA} = E [K_{SEA}] (Aléa)), ainsi que des clés secrètes secondaires ou particulières de personnalisation K_{PERX}, K_{PERY}, etc... propres à chaque site X, Y, etc.. pour lequel la carte devra être personnalisée.

A l'étape 217, ces données de personnalisation sont transmises à la carte sous forme de plusieurs trames.

A l'étape 218, la carte reçoit les trames de personnalisation, vérifie les codes de commande de personnalisation, stocke les données reçues et envoie un accusé de réception à l'outil de personnalisation.

A l'étape 219, la carte calcule un code ou mot de passe A_{PC} de vérification du mot de passe d'authentification A_{PO} par chiffrement de l'aléa selon la fonction logique F au moyen de la clé de personnalisation spécifique K_{PER} stockée dans sa mémoire en 110 ou 123 : A_{PC} = F [K_{PER}] (Aléa).

A l'étape 220, la carte vérifie que le mot de passe d'authentification A_{PO} reçu de l'outil de personnalisation 30 est cohérent avec le mot de passe de vérification A_{PC} calculé par la carte et, dans l'affirmative, mémorise les données de personnalisation en 221 : cette cohérence peut consister, par exemple, en ce que les deux mots de passe sont identiques comme représenté à la figure 4, mais elle peut également résider dans le fait que ces deux mots de passe sont liés par une autre relation prédéterminée.

Enfin, à l'étape 222 la carte substitue la nouvelle clé de personnalisation NK_{PER} reçue de l'outil de personnalisation à l'ancienne clé K_{PER}. Cette nouvelle clé NK_{PER} n'est pas connue du fournisseur à qui il sera désormais impossible d'accéder aux données de personnalisation du client. L'accès en lecture et/ou en écriture à ces données de personnalisation nécessitera la fourniture à la carte, par l'outil de personnalisation, d'un nouveau mot de passe d'authentification NA_{PO} = F[NK_{PER}] (Aléa) cohérent avec le mot de passe de vérification NA_{PC} calculé dans la carte comme indiqué en 219, NA_{PO} et NA_{PC} étant calculés sur la base d'un nouvel aléa généré dans la carte et transmis à l'outil de personnalisation.

Cependant, la connaissance de la clé secrète de personnalisation commune NK_{PER} ne permettra pas de lire les clés secrètes de personnalisation secondaires K_{PERX}, K_{PERY}, etc... chargées dans la carte à l'étape 221, ni aucune autre clé secrète.

En effet, les clés secrètes ne peuvent pas être lues car le programme du microcontrôleur 7 ne comporte aucune commande de lecture de ces paramètres.

Après l'étape 222, l'administrateur général peut transmettre les cartes aux administrateurs locaux des sites X, Y, etc... qui, chacun au moyen des clés secondaires respectives K_{PERX}, K_{PERY}, etc..., seront en mesure, par un processus similaire à celui de la figure 4 qu'il n'y a pas lieu de décrire à nouveau en détail, de charger dans la carte les paramètres de personnalisation propres au site dont ils sont responsables. A cet effet, la clé secondaire propre à la personnalisation de la carte pour chaque site aura été communiquée de manière confidentielle par l'administrateur général à l'administrateur local concerné.

Au moyen de la clé secondaire qui lui aura été communiquée, l'administrateur local chargera dans la carte les données de personnalisation propres au site concerné, par exemple une clé d'authentification pour le calcul d'un mot de passe d'authentification vis-à-vis d'une unité de vérification de ce site. C'est ainsi que l'administrateur local du site X pourra charger une clé d'authentification K_{SEAX}, l'administrateur local du site Y une clé d'authentification K_{SEAY}, etc... Au cours du processus de personnalisation de la carte pour un site donné X, l'administrateur local aura, dans la carte, la possibilité de substituer à la clé secondaire de personnalisation K_{PERX} reçue de l'administrateur général pour le site concerné une nouvelle clé secondaire de personnalisation NK_{PERX}, comme décrit à la figure 4. Ceci interdira à l'administrateur général d'avoir accès à la lecture et/ou à la modification des paramètres de personnalisation des cartes dont la clé secondaire de personnalisation aura été modifiée. La modification des clés secondaires permet d'assurer également l'étanchéité entre les différents segments ou fonctions de la carte. En modifiant les clés secondaires K_{PERX}, K_{PERY}, etc... (remplacées par NK_{PERX}, NK_{PERY}, etc...), on se protège contre une attaque visant à écrire d'autres données secrètes dans les segments. Ce type d'attaque est limité, car il ne sera pas possible de lire ces données secrètes même si on possède la clé secrète secondaire de personnalisation correspondante. Mais on garantit ainsi l'accès exclusif à la personnalisation de chaque segment, comme on garantit l'accès exclusif aux données de personnalisation communes avec la clé K_{PER}, NK_{PER}.

De préférence, la clé K_{PER}, NK_{PER} spécifique à la carte permet, après personnalisation des segments au moyen des clés secondaires K_{PERX}, K_{PERY}, NK_{PERX}, NK_{PERY}, d'écraser ces dernières afin d'effectuer, si nécessaire, un nouveau processus d'initialisation de l'ensemble des paramètres de personnalisation de la carte. Cette possibilité peut être utile, en cas d'anomalie, pour éviter que le dispositif soit définitivement rendu inutilisable.

Cependant, en variante, il peut être prévu d'interdire cette possibilité.

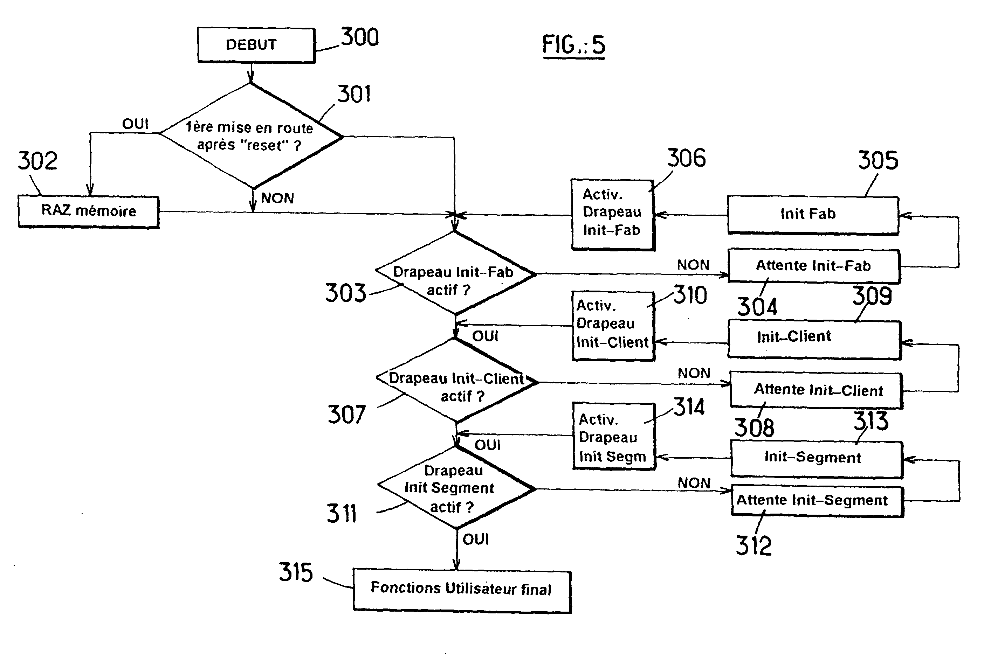

L'organigramme général de la figure 5 illustre les phases principales du programme qui se déroule dans une carte 2 pourvue de plusieurs segments qui, après une initialisation des paramètres de personnalisation communs, doivent être initialisés avec des paramètres de personnalisation qui leur sont propres en vue de la mise en oeuvre, au moyen de la carte, de fonctions propres à chaque segment.

Le programme débute en 300 et en 301 un test est effectué pour déterminer s'il s'agit de la première mise en route de la carte après remise à zéro ("RESET").

Dans l'affirmative, la mémoire est remise à zéro en 302, puis on passe à un test 303 pour déterminer si un drapeau représentatif de l'initialisation des paramètres en production (paramètres initialisés par le fabricant) est actif. Si la réponse au test 301 est négative, on passe directement au test 303.

Si la réponse au test 303 est négative, le programme se met dans un état d'attente d'initialisation des paramètres de production (étape 304). L'étape suivante 305 correspond à l'initialisation dans la carte 2 des paramètres de production comme décrit en regard des figures 2 ou 3. Lorsque cette initialisation est achevée, un drapeau est activé à l'étape 306 et le programme revient à l'entrée du test 303.

Lorsque la réponse au test 303 est positive, c'est-à-dire que les paramètres de production ont été initialisés, le programme passe à un test 307 pour déterminer si un drapeau représentatif de l'initialisation par le client des paramètres de personnalisation communs est actif. Si la réponse est négative, le programme se met dans un état d'attente d'initialisation des paramètres de personnalisation communs (étape 308). L'étape suivante 309 correspond à l'initialisation dans la carte 2 des paramètres de personnalisation communs comme décrit en regard de la figure 4. Ces paramètres de personnalisation communs comprennent entre autres les clés de personnalisation reprogrammables K_{PERX}, K_{PERY} particulières à chaque segment ou fonction. Lorsque cette initialisation est achevée, un drapeau est activé à l'étape 310 et le programme revient à l'entrée du test 307.

Lorsque la réponse au test 307 est positive, le programme passe au test 311 pour déterminer si un drapeau représentatif de l'initialisation des paramètres de personnalisation propres ou particuliers aux différents segments de la carte est actif. Si la réponse est négative, le programme se met dans un état d'attente d'initialisation des paramètres de personnalisation particuliers aux segments (étape 312). L'étape 313 correspond à l'initialisation dans la carte 2 des paramètres de personnalisation particuliers aux segments. Cette initialisation est subordonnée, pour chaque segment, à la fourniture à la carte d'un code d'accès correct A_{PX}, A_{PY}, fonction de la clé K_{PERX}, K_{PEY} affecté à ce segment et d'un aléa fourni par la carte à l'outil de personnalisation comme décrit en regard de la figure 4. Suivant les cas, cette initialisation peut être effectuée par l'administrateur général ou par des administrateurs locaux au niveau de différents sites géographiques, comme décrit précédemment. Au cours de ce processus d'initialisation des paramètres de personnalisation particuliers, l'administrateur responsable peut substituer une nouvelle clé de personnalisation particulière NK_{PERX}, NK_{PERY} à la clé de personnalisation initiale K_{PERX}, K_{PERY} qui, pour le segment considéré, avait été chargée à l'étape 309. Seul le détenteur de cette nouvelle clé NK_{PERX}, NK_{PERY} pourra générer le nouveau code d'accès NA_{PX}, NA_{PY} et accéder ultérieurement (en lecture et/ou en écriture selon la programmation des moyens de traitement) aux données de personnalisation particulières au segment correspondant, et le détenteur de la clé de personnalisation spécifique K_{PER} (ou NK_{PER} si celle-ci a été modifiée), n'y aura pas accès s'il ne connaît pas la nouvelle clé de personnalisation particulière.

Lorsque l'initialisation des paramètres de personnalisation de tous les segments est achevée, un drapeau est activé à l'étape 314, la réponse au test 311 est positive et le programme passe à l'étape 315 qui représente l'accès, pour l'utilisateur final, aux différentes fonctions de la carte mises en oeuvre par le programme de celle-ci.

Comme indiqué précédemment, l'invention n'est pas limitée à la mise en oeuvre d'algorithmes symétriques à clé secrète, et elle s'applique également dans le cas où les mécanismes d'initialisation des paramètres de la carte font appel à des algorithmes asymétriques à clé publique et clé privée. Dans ce cas, la clé publique est stockée dans la carte ou dispositif 2, l'aléa est toujours généré dans le dispositif 2 et la clé privée est stockée dans un outil de personnalisation ou dans une carte à puce utilisée par l'outil de personnalisation.

L'utilisation d'algorithmes asymétriques ne permet cependant pas de mettre en oeuvre une dérivation des clés, car le concept de clé mère n'existe pas dans ce type d'algorithme.

## Revendications

1. Dispositif portable électronique sécurisé de communication avec au moins une unité électronique, pour la mise en oeuvre d'au moins une fonction, comprenant :
* des moyens de mémorisation de données (8, 9),
* des moyens d'interface avec au moins un outil extérieur pour charger des données dans lesdits moyens de mémorisation,
* des moyens de traitement de données (7) comprenant des moyens d'initialisation pour permettre, en réponse à l'application d'un code secret d'accès en personnalisation spécifique audit dispositif (A_{PO}), la modification dudit code d'accès spécifique et le chargement de données de personnalisation dans lesdits moyens de mémorisation, **caractérisé en ce que** ledit dispositif est adapté à la mise en oeuvre d'une pluralité de fonctions (X, Y, .....) et comporte :
* des premiers moyens (7, 309) commandés par ledit code secret d'accès en personnalisation spécifique (A_{PO}), pour charger dans lesdits moyens de mémorisation (9) une pluralité de données secrètes particulières reprogrammables (K_{PERX}, K_{PERY}, .....) représentatives respectivement de codes secrets d'accès en personnalisation particuliers différents les uns des autres (A_{PX}, A_{PY},.....) et affectés chacun à la personnalisation d'une fonction particulière (X, Y,.....) dudit dispositif,
* des seconds moyens (7, 313) commandés par lesdits codes secrets d'accès en personnalisation en particuliers (A_{PX}, A_{PY} .....) pour charger dans lesdits moyens de mémorisation (9) des données de personnalisation particulières (K_{SEAX}, K_{SEAY}, .....) affectées respectivement à la mise en oeuvre desdites fonctions (X, Y, .....) par lesdits moyens de traitement (7), et
* des moyens d'inhibition (7 ; 313) adaptés pour n'autoriser la modification de l'une quelconque desdites données secrètes particulières (K_{PERX}, K_{PERY}, .....) consécutivement à son chargement dans lesdits moyens de mémorisation et ledit chargement desdites données de personnalisation (K_{SEAX}, _{KSEAY}, .....) particulières à une fonction (X, Y, .....) qu'en réponse à l'application de celui (A_{PX}, A_{PY}, .....) desdits codes secrets d'accès en personnalisation particuliers déjà affecté à ladite fonction (X, Y, ....).

2. Dispositif selon la revendication 1, **caractérisé en ce que** lesdits moyens d'inhibition (7) sont adaptés pour interdire l'accès en lecture à l'une quelconque desdites données secrètes (K_{PER}, K_{PERX}, K_{PERY}.....).

3. Dispositif selon l'une quelconque des revendications 1 et 2, **caractérisé en ce que** lesdits moyens d'inhibition sont adaptés pour interdire l'accès en lecture et en écriture desdits moyens de traitement (7) auxdites données de personnalisation particulières (K_{SEAX}, K_{SEAY}, .....) par l'intermédiaire dudit code secret d'accès en personnalisation spécifique (A_{PO}, NA_{PO}).

4. Dispositif selon l'une quelconque des revendications 1 à 3, **caractérisé en ce que** lesdits moyens d'inhibition sont adaptés pour interdire l'accès en lecture desdites données de personnalisation particulières (K_{SEAX}, K_{SEAY}, .....) consécutivement au chargement desdites données au moyen desdits codes secrets d'accès en personnalisation particuliers (A_{PX}, A_{PY} .....) affectés auxdites fonctions (X, Y, .....).

5. Dispositif selon l'une quelconque des revendications 1 à 3, **caractérisé en ce que** lesdits moyens d'inhibition sont adaptés pour autoriser l'accès en lecture de données de personnalisation (K_{SEAX}, K_{SEAY}, .....) particulières à une fonction (X, Y, .....) au moyen du code secret d'accès en personnalisation particulier (A_{PX}, A_{PY}, NA_{PX}, NA_{PY}, .....) affecté à ladite fonction.

6. Dispositif selon l'une quelconque des revendications 1 à 5, **caractérisé en ce que** lesdits moyens de traitement (7) sont adaptés pour autoriser, au moyen dudit code secret d'accès en personnalisation spécifique (A_{PO}, NA_{PO}), l'effacement desdites données secrètes particulières (K_{PERX}, K_{PERY}, ....) et desdites données de personnalisation particulières (K_{SEAX}, K_{SEAY}, ....) préalablement chargées dans lesdits moyens de mémorisation et le chargement de nouvelles données secrètes particulières (NK_{PERX}, NK_{PERY}, .....).

7. Dispositif selon l'une quelconque des revendications 1 à 6, **caractérisé en ce que** ledit code secret d'accès en personnalisation spécifique (A_{PO}) est un code d'accès au chargement dans lesdits moyens de mémorisation de données de personnalisation (Param-perso) communes à l'ensemble desdites fonctions (X, Y, .....) du dispositif.

8. Dispositif selon l'une quelconque des revendications 1 à 7, **caractérisé en ce qu'**il comprend des troisièmes moyens (7, 305) de chargement dans lesdits moyens de mémorisation d'une donnée secrète spécifique reprogrammable (K_{PER}) représentative dudit code secret d'accès en personnalisation spécifique (A_{PO}), lesdits moyens d'initialisation (7, 200-222) étant adaptés pour n'autoriser le remplacement de ladite donnée secrète spécifique (K_{PER}) par une nouvelle donnée secrète spécifique (NK_{PER}), représentative d'un nouveau code secret d'accès en personnalisation spécifique (NA_{PO}), qu'en réponse à l'application auxdits moyens de traitement (7) du code secret d'accès spécifique (A_{PO}) image de ladite donnée secrète spécifique (K_{PER}) à remplacer.

9. Dispositif selon la revendication 8, caractérisé en que les lesdits moyens de mémorisation comprennent au moins une mémoire permanente (8) dans laquelle est stockée une clé secrète de base (K_{ROM}), lesdits moyens d'initialisation (7) comprenant des premiers moyens (7, 107) pour calculer une valeur initiale de ladite donnée secrète spécifique (K_{PER}) en fonction de ladite clé secrète de base (K_{ROM}) et d'un paramètre secret initial (E(K_{PER}) ; E(K_{PEM})).

10. Dispositif selon l'une quelconque des revendications 1 à 9, **caractérisé en ce que** ladite donnée secrète (K_{PER}, NK_{PER}) est une clé secrète de calcul d'un code (A_{PC}, NA_{PC}) de vérification du code d'accès en personnalisation spécifique (A_{PO}; NA_{PO}) dont ladite donnée secrète est représentative.

11. Dispositif selon la revendication 10, **caractérisé en ce que** lesdits moyens de traitement (7) comprennent des seconds moyens pour calculer ledit code de vérification (A_{PC}, A_{PX}, A_{PY}) par chiffrement d'une variable au moyen de ladite clé secrète de calcul (K_{PER}, K_{PERX}, K_{PERY},....).

12. Dispositif selon l'une quelconque des revendications 1 à 11, **caractérisé en ce que** lesdites données de personnalisation comprennent au moins une pluralité de clés secrètes d'authentification (K_{SEAX}, K_{SEAY}) différentes les unes des autres et affectées chacune à l'une desdites fonctions et **en ce que** lesdits moyens de traitement (7) comprennent des troisièmes moyens pour calculer un code d'authentification (A_{PEA}) vis-à-vis d'une unité de vérification (3) en fonction de l'une desdites clés secrètes d'authentification (K_{SEAX}, K_{SEAY}).

13. Procédé d'initialisation d'un dispositif selon l'une quelconque des revendications 1 à 12, **caractérisé en ce qu'**il comprend :
- un premier stade d'initialisation (100-110 ; 111-123) consistant à définir et à stocker dans lesdits moyens de mémorisation (9) une clé secrète de personnalisation reprogrammable (K_{PER}) spécifique audit dispositif,
- un deuxième stade de personnalisation (201-222) consistant, au moyen d'un code secret d'accès en personnalisation spécifique (A_{PO}) fonction de ladite clé de personnalisation spécifique (K_{PER}), à charger dans lesdits moyens de mémorisation des données de personnalisation (Param-perso) communes auxdites fonctions et des clés secrètes reprogrammables particulières (K_{PERX}, K_{PERY}) de calcul desdits codes secrets d'accès en personnalisation particuliers (A_{PX}, A_{PY}) affectés chacun au chargement de données de personnalisation particulières relatives à l'une desdites fonctions (X, Y), et à modifier ladite clé de personnalisation spécifique (K_{PER}), et
- un troisième stade de personnalisation (313) consistant, pour chacune desdites fonctions (X, Y), à charger dans lesdits moyens de mémorisation, au moyen du code secret d'accès en personnalisation particulier correspondant (A_{PX}, A_{PY}), les données de personnalisation (K_{SEAX}, K_{SEAY}, .....) relatives à ladite fonction.

14. Procédé selon la revendication 13, **caractérisé en ce que** ledit troisième stade comprend l'étape consistant, lors du chargement des données de personnalisation particulières relatives à au moins l'une desdites fonctions (X, Y), à modifier ladite clé secrète particulière (K_{PERX}, K_{PERY}) de calcul dudit code secret d'accès particulier (A_{PX}, A_{PY}) affecté à ladite fonction.

15. Procédé selon l'une quelconque des revendications 13 et 14, **caractérisé en ce que** le premier stade d'initialisation comprend :
• au moins une première phase d'initialisation consistant à définir au moins une donnée secrète (K_{PEM} ; E(K_{PEM})) commune à un ensemble de dispositifs destinés à une même entité,
• au moins une deuxième phase d'initialisation comprenant les étapes consistant, pour chaque dispositif dudit ensemble, à :
a) lire une donnée d'identification (NS) spécifique portée par ledit dispositif,
b) calculer une première clé secrète de personnalisation spécifique (K_{PER}) en fonction de ladite donnée secrète commune (K_{PEM} ; E(K_{PEM})) et de ladite donnée d'identification (NS),
c) stocker ladite donnée d'identification (NS) et ladite première clé de personnalisation spécifique (K_{PER}) dans lesdits moyens de mémorisation (9).

16. Procédé selon la revendication 15, **caractérisé en ce que** ledit deuxième stade de personnalisation comprend les étapes consistant, pour chaque dispositif dudit ensemble, à :
a) extraire (209) ladite donnée d'identification spécifique (NS) dudit dispositif (2),
b) calculer (214) dans un premier outil extérieur (30) ladite première clé de personnalisation spécifique (K_{PER}) en fonction de ladite donnée secrète commune (K_{PEM}) et de ladite donnée d'identification spécifique (NS),
c) calculer (215) dans ledit outil extérieur (30) un premier code secret d'accès en personnalisation spécifique (A_{PO}) en fonction de ladite première clé de personnalisation spécifique (K_{PER}) et d'un aléa transmis par ledit dispositif,
d) transmettre (217) dudit premier outil audit dispositif (2) ledit premier code secret et d'accès en personnalisation spécifique (A_{PO}) avec des paramètres de personnalisation comprenant une deuxième clé de personnalisation spécifique (NK_{PER}) différente de ladite première clé de personnalisation spécifique (K_{PER})
e) calculer (219) dans ledit dispositif un code (A_{PC}) de vérification dudit premier code secret d'accès en personnalisation specifique (A_{PO}) en fonction de ladite première clé de personnalisation spécifique (K_{PER}) et dudit aléa,
f) comparer (220) dans ledit dispositif ledit premier code secret d'accès en personnalisation spécifique (A_{PO}) et ledit code de vérification (A_{PC}) et, en réponse à une cohérence desdits codes,
g) stocker (221) lesdits paramètres de personnalisation dans lesdits moyens de mémorisation (9), et
h) substituer (222) ladite deuxième clé de personnalisation spécifique (NK_{PER}) à ladite première clé de personnalisation spécifique (K_{PER}) dans lesdits moyens de mémorisation (9).

17. Procédé selon l'une quelconque des revendications 15 et 16, **caractérisé en ce que** ledit premier stade d'initialisation comprend une troisième phase consistant à stocker initialement une clé secrète de base (K_{ROM}) commune dans une mémoire permanente (8) desdits moyens de mémorisation et **en ce que** les étapes a) et b) de ladite deuxième phase d'initialisation consistent à :
• appliquer ladite donnée secrète commune (K_{PEM}) et ladite clé de base (K_{ROM}) à un deuxième outil extérieur (20),
• lire ladite donnée d'identification (NS) au moyen dudit deuxième outil,
• calculer (100) ladite clé de personnalisation spécifique (K_{PER}) au moyen dudit deuxième outil (20),
• chiffrer (101) dans ledit deuxième outil extérieur (20) ladite clé de personnalisation spécifique (K_{PER}) au moyen de ladite clé de base commune (K_{ROM}),
• transmettre (104) dudit deuxième outil (20) audit dispositif (2) le résultat (E(K_{PER})) dudit chiffrement, et
• déchiffrer (107) ledit résultat (E(K_{PER})) dans lequel dispositif au moyen de ladite clé de base (K_{ROM}) pour restituer ladite clé de personnalisation spécifique (K_{PER}).

18. Procédé selon l'une quelconque des revendications 15 et 16, **caractérisé en ce que** ledit premier stade d'initialisation comprend une troisième phase consistant à stocker initialement une clé de base (K_{ROM}) commune dans une mémoire permanente (8) desdits moyens de mémorisation, **en ce que** ladite première phase consiste également à chiffrer (111) ladite donnée secrète commune (K_{PEM}) au moyen de ladite clé de base commune (K_{ROM}) et à appliquer le résultat dudit chiffrement (E(K_{PEM})) à un deuxième outil extérieur (20), et **en ce que** ladite deuxième phase consiste également à :
a) lire (115) ladite donnée d'identification spécifique (NS) au moyen dudit deuxième outil (20) et transmettre ladite donnée d'identification (NS) et le résultat dudit chiffrement (E(K_{PEM})) audit dispositif,
b) déchiffrer (119) ledit résultat (E(K_{PEM})) dans ledit dispositif (2) au moyen de ladite clé de base (K_{ROM}) pour restituer ladite donnée secrète commune (K_{PEM}), puis calculer ensuite (120) ladite clé de personnalisation spécifique (K_{PER}).

19. Système de communication sécurisée, **caractérisé en ce qu'**il comprend un ensemble de dispositifs selon l'une quelconque des revendications 1 à 12 et au moins un outil (30) d'initialisation de paramètres de personnalisation pour le chargement dans chacun desdits dispositifs
* de données de personnalisation (Param-perso) communes aux différentes fonctions (X, Y, .....) dudit dispositif,
* desdites données de personnalisation particulières (K_{SEAX}, K_{SEAY}, .....) et
* desdites données secrètes particulières (K_{PERX}, K_{PERY}, .....).

20. Système de communication sécurisée selon la revendication 19, **caractérisé en ce qu'**il comprend en outre un outil (20) d'initialisation de paramètres de production pour le chargement initial dans chacun desdits dispositifs d'une donnée secrète reprogrammable (K_{PER}) spécifique à chaque dispositif et représentative dudit code secret d'accès en personnalisation spécifique (A_{PO}).

21. Système de communication sécurisée, **caractérisé en ce qu'**il comprend un ensemble de dispositifs selon la revendication 12 et au moins une unité de vérification (3).

## Patentansprüche

1. Tragbare gesicherte elektronische Vorrichtung zur Kommunikation mit mindestens einer elektronischen Einheit, zur Inbetriebnahme mindestens einer Funktion, umfassend:
* Mittel zum Speichern von Daten (8, 9),
* Schnittstellenmittel mit mindestens einem äußeren Werkzeug, um Daten in die Mittel zum Speichern zu laden,
* Mittel zum Verarbeiten von Daten (7), enthaltend Initialisierungsmittel, um in Reaktion auf die Eingabe eines spezifischen geheimen Codes zum personalisierten Zugang A_{PO} in diese Vorrichtung die Abwandlung dieses spezifischen Zugangscodes und das Laden von Personalisierungsdaten in die Mittel zum Speichern zuzulassen, **dadurch gekennzeichnet, daß** die Vorrichtung zur Inbetriebnahme einer Vielzahl von Funktionen (X, Y, .....) eingerichtet ist und umfasst:
* erste Mittel (7, 309), veranlasst durch diesen spezifischen geheimen Code zum personalisierten Zugang A_{PO}, in die Mittel zum Speichern (9) eine Vielzahl von besonderen, umprogrammierbaren geheimen Daten (K_{PERX}, K_{PERY},....) zu laden, die jeweils für voneinander verschiedene besondere geheime Codes zum personalisierten Zugang (A_{PX}, A_{PY},...) stehen, von denen jeder der Personalisierung einer besonderen Funktion (X, Y,....) der Vorrichtung zugewiesen ist;
* zweite Mittel (7, 313), veranlasst durch diese besonderen geheimen Codes zum personalisierten Zugang (A_{PX}, A_{PY}....), in die Mittel zum Speichern (9) besondere Personalisierungsdaten (K_{SEAX}, K_{SEAY}...) zu laden, die jeweils der Inbetriebnahme der Funktionen (X, Y....) durch die Mittel zum Verarbeiten (7) zugewiesen sind.
* Mittel zum Verhindern (7; 313), dafür eingerichtet, die Veränderung irgendwelcher der besonderen, geheimen Daten (K_{PERX}, K_{PERY}....) nach ihrem Laden in die Mittel zum Speichern nicht zu gestatten, und das Laden der für eine Funktion (X, Y, ....) eigentümlichen Personalisierungsdaten (K_{SEAX}, K_{SEAY}....) nur in Reaktion auf die Eingabe desjenigen (A_{PX}, A_{PY}....) der besonderen geheimen Codes zum personalisierten Zugang zu gestatten, der bereits der Funktion (X, Y) zugewiesen wurde.

2. Vorrichtung gemäß Anspruch 1, **dadurch gekennzeichnet, daß** die Mittel zum Verhindern (7) dafür eingerichtet sind, den Zugriff zum Lesen irgendwelcher der geheimen Daten (K_{PER}, K_{PERX}, K_{PERY}....) zu verbieten.

3. Vorrichtung gemäß einem der Ansprüche 1 und 2, **dadurch gekennzeichnet, daß** die Mittel zum Verhindern dafür eingerichtet sind, den Zugriff zum Lesen und zum Schreiben der Mittel zur Verarbeitung (7) auf die besonderen Personalisierungsdaten (K_{SEAX}, K_{SEAY}...) mittels des spezifischen geheimen Codes zum personalisierten Zugang (A_{PO}, NA_{PO}) zu verbieten.

4. Vorrichtung gemäß einem der Ansprüche 1 bis 3, **dadurch gekennzeichnet, daß** die Mittel zum Verhindern dafür eingerichtet sind, den Zugriff zum Lesen der besonderen Personalisierungsdaten (K_{SEAX}, K_{SEAY}.....) nachfolgend auf das Laden dieser Daten zu verbieten, mittels der besonderen geheimen Codes zum personalisierten Zugang (A_{PX}, A_{PY}...), die den Funktionen (X, Y,....) zugewiesen sind.

5. Vorrichtung gemäß einem der Ansprüche 1 bis 3, **dadurch gekennzeichnet, daß** die Mittel zum Verhindern dafür eingerichtet sind, den Zugriff zum Lesen der für eine Funktion (X, Y....) eigentümlichen Personalisierungsdaten (K_{SEAX}, K_{SEAY}.....) zu erlauben, mittels des besonderen geheimen Codes zum personalisierten Zugang (A_{PX}, A_{PY,} NA_{PX}, NA_{PY} ..) welcher der Funktion zugewiesen ist.

6. Vorrichtung gemäß einem der Ansprüche 1, bis 5, **dadurch gekennzeichnet, daß** die Mittel zum Verarbeiten (7) dafür eingerichtet sind, mittels des spezifischen geheimen Codes zum personalisierten Zugang (A_{PO},NA_{PO}) das Löschen der vorher in die Mittel zum Speichern geladenen besonderen, geheimen Daten (K_{PERX}, K_{PERY}....) und der besonderen Personalisierungsdaten (K_{SEAX}, K_{SEAY}......) und das Laden neuer besonderer geheimer Daten (NK_{PERX}, NK_{PERY}....) zu erlauben.

7. Vorrichtung gemäß einem der Ansprüche 1 bis 6, **dadurch gekennzeichnet, daß** der spezifische geheime Code zum personalisierten Zugang (A_{PO}) ein Zugangscode zum Laden von Personalisierungsdaten (Param-perso) in die Mittel zum Speichern ist, die für die Gesamtheit der Funktionen (X, Y.....) der Vorrichtung gemeinsam sind.

8. Vorrichtung gemäß einem der Ansprüche 1 bis 7, **dadurch gekennzeichnet, daß** sie dritte Mittel (7, 305) zum Laden einer spezifischen umprogrammierbaren geheimen Date (K_{PER}), die für den spezifischen geheimen Code zum personalisierten Zugang (A_{PO}) steht, in die Mittel zum Speichern umfasst, wobei die Mittel zur Initialisierung (7, 200-222) dafür eingerichtet sind, das Ersetzen der spezifischen geheimen Date (K_{PER}) durch eine neue spezifische geheime Date (NK_{PER}), die für einen neuen spezifischen geheimen Code zum personalisierten Zugang (NA_{PO}) steht, nur in Reaktion auf die Anwendung des spezifischen geheimen Zugangscodes (A_{PO}) auf die Mittel zum Verarbeiten (7) zu erlauben, der ein Abbild der spezifischen geheimen Date (K_{PER}) ist, die ersetzt werden soll.

9. Vorrichtung gemäß Anspruch 8, **dadurch gekennzeichnet, daß** die Mittel zum Speichern mindestens einen permanenten Speicher (8) umfassen, in dem ein geheimer Basisschlüssel (K_{ROM}) gespeichert ist, wobei die Mittel zum Initialisieren (7) erste Mittel (7, 107) zum Berechnen eines Anfangswertes der spezifischen geheimen Date (K_{PER}) in Abhängigkeit von dem geheimen Basisschlüssel (K_{ROM})und einer geheimen Anfangskenngröße (E(K_{PER}); E(K_{PEM})) umfassen.

10. Vorrichtung gemäß einem der Ansprüche 1 bis 9, **dadurch gekennzeichnet, daß** die geheime Date (K_{PER}, NK_{PER}) ein geheimer Schlüssel zum Berechnen eines Codes (A_{PC}, NA_{PC}) zur Verifikation des spezifischen Codes zum personalisierten Zugang (A_{PO}, NA_{PO}) ist, für den die geheime Date steht.

11. Vorrichtung gemäß Anspruch 10, **dadurch gekennzeichnet, daß** die Mittel zum Verarbeiten (7) zweite Mittel zum Berechnen des Codes zur Verifikation (A_{PC}, A_{PX}, A_{PY}) durch Verschlüsselung einer Variablen mittels des geheimen Schlüssels zum Berechnen (K_{PER}, K_{PERX}, K_{PERY}....) umfassen.

12. Vorrichtung gemäß einem der Ansprüche 1 bis 11, **dadurch gekennzeichnet, daß** die Personalisierungsdaten mindestens eine Vielzahl von geheimen, untereinander verschiedenen und jeweils einer der Funktionen zugewiesenen Schlüsseln zur Authentifizierung (K_{SEAX}, K_{SEAY}) umfassen, und daß die Mittel zum Verarbeiten (7) dritte Mittel zum Berechnen eines Codes zur Authentifizierung (A_{PEA}) gegenüber einer Verifikationseinheit (3) in Abhängigkeit von einem der geheimen Schlüssel zu Authentifizierung (K_{SEAX}, K_{SEAY}) umfassen.

13. Verfahren zum Initialisieren einer Vorrichtung gemäß einem der Ansprüche 1 bis 12, **dadurch gekennzeichnet, daß** es umfasst:
- einen ersten Abschnitt des Initialisierens (100-110;111-123), der daraus besteht, in den Mitteln zum Speichern (9) einen geheimen, umprogrammierbaren Schlüssel zur Personalisierung (K_{PER}), spezifisch für die Vorrichtung, zu definieren und zu speichern,
- einen zweiten Abschnitt der Personalisierung (201-222), der daraus besteht, mittels eines spezifischen geheimen Codes zum personalisierten Zugang (A_{PO}) in Abhängigkeit von dem spezifischen Schlüssel zur Personalisierung (K_{PER}) in die Mittel zum Speichern Personalisierungsdaten (Param-Perso), die für die Funktionen gemeinsam sind, zu laden, sowie besondere geheime umprogrammierbare Schlüssel (K_{PERX}, K_{PERY}) zum Berechnen der besonderen geheimen Codes zum personalisierten Zugang (A_{PX}, A_{PY}), die jeweils dem Laden der besonderen Personalisierungsdaten, mit Bezug auf eine der Funktionen (X, Y), zugewiesen sind, und den spezifischen Schlüssel zur Personalisierung (K_{PER}) zu verändern, und
- einen dritten Abschnitt der Personalisierung (313), der daraus besteht, für jede der Funktionen (X, Y) in den Mitteln zum Speichern mittels des entsprechenden besonderen geheimen Codes zum personalisierten Zugang (A_{PX}, A_{PY}) die auf die Funktion bezogenen Personalisierungsdaten (K_{SEAX}, K_{SEAY}) zu laden.

14. Verfahren gemäß Anspruch 13, **dadurch gekennzeichnet, daß** der dritte Abschnitt eine Stufe umfasst, die daraus besteht, während des Ladens der besonderen Personalisierungsdaten, die sich auf mindestens eine der Funktionen (X, Y) beziehen, den besonderen geheimen Schlüssel (K_{PERX}, K_{PERY}) zum Berechnen des besonderen geheimen Zugangscodes (A_{PX}, A_{PY}), welcher der Funktion zugewiesen ist, zu verändern.

15. Verfahren gemäß einem der Ansprüche 13 und 14, **dadurch gekennzeichnet, daß** der erste Abschnitt des Initialisierens umfasst:
• mindestens eine erste Phase des Initialisierens, die daraus besteht, mindestens eine geheime Date (K_{PEM}; E(K_{PEM})) zu definieren, gemeinsam für eine Gesamtheit von Vorrichtungen, die für eine gleiche Einheit bestimmt sind,..
• mindestens eine zweite Phase des Initialisierens, umfassend die Stufen, bestehend für jede Vorrichtung der Gesamtheit aus:
a) dem Lesen einer spezifischen Identifikationsdate (NS), die von der Vorrichtung gehalten wird,
b) dem Berechnen eines ersten geheimen spezifischen Schlüssels zur Personalisierung (K_{PER}), in Abhängigkeit von der geheimen gemeinsamen Date (K_{PEM}; E(K_{PEM})) und von der Identifikationsdate (NS),
c) dem Speichern der Identifikationsdate (NS) und des ersten geheimen spezifischen Schlüssels zur Personalisierung (K_{PER}) in den Mitteln zum Speichern (9).

16. Verfahren gemäß Anspruch 15, **dadurch gekennzeichnet, daß** der zweite Abschnitt des Personalisierens die Stufen umfasst, die für jede Vorrichtung der Gesamtheit bestehen aus:
a) dem Herausziehen (209) der spezifischen Identifikationsdate (NS) aus der Vorrichtung (2),
b) dem Berechnen (214) in einem ersten äußeren Werkzeug (30) des ersten spezifischen Schlüssels zur Personalisierung (K_{PER}) in Abhängigkeit von der geheimen gemeinsamen Date (K_{PEM}) und von der spezifischen Identifikationsdate (NS),
c) dem Berechnen (215) in dem äußeren Werkzeug (30) eines ersten spezifischen geheimen Zugangscodes (A_{PO}) in Abhängigkeit von dem ersten spezifischen Schlüssel zur Personalisierung (K_{PER}) und von einer Zufallszahl, die von der Vorrichtung übermittelt wird,
d) dem Übermitteln (217) aus dem ersten Werkzeug an die Vorrichtung (2) des ersten spezifischen geheimen Zugangscodes (A_{PO}) mit Personalisierungskenngrößen, umfassend einen zweiten spezifischen Schlüssel zur Personalisierung (NK_{PER}), der von dem ersten spezifischen Schlüssel zur Personalisierung (K_{PER}) verschieden ist.
e) dem Berechnen (219) in der Vorrichtung (2) eines Codes (A_{PC}) zur Verifikation des ersten spezifischen geheimen Zugangscodes (A_{PO}) in Abhängigkeit von dem ersten spezifischen Schlüssel zur Personalisierung (K_{PER}) und von der Zufallszahl,
f) dem Vergleichen (220) in der Vorrichtung des ersten spezifischen geheimen Zugangscodes (A_{PO}) und des Codes zur Verifikation (A_{PC}) und, in Reaktion auf eine Übereinstimmung der Codes,
g) dem Speichern (221) der Personalisierungskenngrößen in den Mitteln zum Speichern (9), und
h) dem Ersetzen (222) des ersten spezifischen Schlüssels zur Personalisierung (K_{PER}) durch den zweiten spezifischen Schlüssel zur Personalisierung (NK_{PER}) in den Mitteln zum Speichern (9).

17. Verfahren gemäß einem der Ansprüche 15 und 16, **dadurch gekennzeichnet, daß** der erste Abschnitt des Initialisierens eine dritte Phase umfasst, die daraus besteht, anfänglich einen gemeinsamen geheimen Basisschlüssel (K_{ROM}) in einem permanenten Speicher (8) der Mittel zum Speichern aufzubewahren, und daß die Stufen a) und b) der zweiten Phase des Initialisierens bestehen aus:
• dem Eingeben der gemeinsamen geheimen Date (K_{PEM}) und des Basisschlüssels (K_{ROM}) in ein zweites äußeres Werkzeug (20),
• dem Lesen der Identifikationsdate (NS) mittels des zweiten Werkzeuges,
• dem Berechnen (100) des spezifischen Schlüssels zur Personalisierung (K_{PER}) mittels des zweiten Werkzeugs (20),
• dem Verschlüsseln (101) des spezifischen Schlüssels zur Personalisierung (K_{PER}) mittels des gemeinsamen Basisschlüssels (K_{ROM}) in dem zweiten äußeren Werkzeug (20),
• dem Übertragen (104) aus dem zweiten Werkzeug (20) an die Vorrichtung (2) des Ergebnisses (E(K_{PER})) der Verschlüsselung, und
• dem Entschlüsseln (107) des Ergebnisses (E(K_{PER})) in der Vorrichtung mittels des Basisschlüssels (K_{ROM}), um den spezifischen Schlüssel zur Personalisierung (K_{PER}) wieder herzustellen.

18. Verfahren gemäß einem der Ansprüche 15 und 16, **dadurch gekennzeichnet, daß** der erste Abschnitt des Initialisierens eine dritte Phase umfasst, die daraus besteht, anfänglich einen gemeinsamen geheimen Basisschlüssel (K_{ROM}) in einem permanenten Speicher (8) der Mittel zum Speichern aufzubewahren, und daß die erste Phase außerdem darin besteht, die geheime gemeinsame Date (K_{PEM}) mittels des gemeinsamen Basisschlüssels (K_{ROM}) zu verschlüsseln (111), und das Ergebnis (E(K_{PEM})) der Verschlüsselung in ein zweites äußeres Werkzeug (20) einzugeben, und daß die zweite Phase außerdem besteht aus:
a) dem Lesen (115) der spezifischen Identifikationsdate (NS) mittels des zweiten Werkzeugs (20) und dem Übermitteln der Identifikationsdate (NS) und des Ergebnisses (E(K_{PEM})) der Verschlüsselung an die Vorrichtung,
b) dem Entschlüsseln (119) des Ergebnisses (E(K_{PEM})) der Verschlüsselung in der Vorrichtung (2) mittels des Basisschlüssels (K_{ROM}), um die gemeinsame geheime Date (K_{PEM}) wieder herzustellen, um sodann den spezifischen Schlüssel zur Personalisierung (K_{PER}) zu berechnen (120).

19. System zur gesicherten Kommunikation, **dadurch gekennzeichnet, daß** es eine Gesamtheit von Vorrichtungen gemäß einem der Ansprüche 1 bis 12 umfasst und mindestens ein Werkzeug (30) zur Initialisierung von Personalisierungskenngrößen für das Laden in jede der Vorrichtungen
* von Personalisierungsdaten (Param-perso), die für die verschiedenen Funktionen (X, Y...) der Vorrichtung gemeinsam sind,
* von besonderen Personalisierungsdaten (K_{SEAX}, K_{SEAY}...), und
* von besonderen geheimen Daten (K_{PERX}, K_{PERY}....)

20. System zur gesicherten Kommunikation gemäß Anspruch 19, **dadurch gekennzeichnet, daß** es außerdem ein Werkzeug (20) zur Initialisierung von Herstellungskenngrößen für das anfängliche Laden einer geheimen umprogrammierbaren Date (K_{PER}) in jeder der Vorrichtungen umfasst, die für jede Vorrichtung spezifisch ist und die für den geheimen besonderen Zugangscode (A_{PO}) zur Personalisierung steht.

21. System zur gesicherten Kommunikation, **dadurch gekennzeichnet, daß** es eine Gesamtheit von Vorrichtungen gemäß Anspruch 12 und mindestens eine Einheit zur Verifikation (3) umfasst.

## Claims

1. Portable electronic device for secure communication with at least one electronic unit for use of at least one function, including:
* data storage means (8,9),
* interface means with at least one external tool for loading data into said storage means,
* data processing means(7) including initialization means for enabling, in response to the application of a personalizing access secret code specific to said device (A_{PO}), modification of said specific access code and loading of personalizing data into said storage means,
**characterized in that** said device is adapted to use a plurality of functions (X, Y, etc) and includes:
* first means (7, 309) controlled by said specific access secret code (A_{PO}) for loading into said storage means (9) reprogrammable particular secret data (K_{PERX}, K_{PERY}, etc.) respectively representative of different particular personalizing access secret codes (A_{PX}, A_{PY}, etc) and each assigned to personalizing a particular function (X, Y, etc) of said device,
* second means (7, 313) controlled by said particular personalizing access secret codes (A_{PX}, A_{PY}, etc.) for loading into said storage means (9) particular personalizing data (K_{SEAX}, K_{SEAY}, etc) assigned to the implementation of said functions (X, Y, etc) by said processing means (7), and
* inhibitor means (7; 313) adapted to authorize modification of any of said particular secret data (K_{PERX}, K_{PERY}, etc) consecutive upon its loading into said storage means and said loading of said personalizing data (K_{SEAX}, (K_{SEAY}, etc) particular to a function (X, Y, etc) only in response to the application of that one (A_{PX}, A_{PY}, etc) of said particular personalizing access secret codes which is already assigned to said function (X, Y, etc).

2. Device according to claim 1, **characterized in that** said inhibitor means (7) are adapted to prohibit read mode access to any of said secret data (K_{PER}, K_{PERX}, K_{PERY}, etc).

3. Device according to claim 1 or claim 2, **characterized in that** said inhibitor means are adapted to prohibit read mode and write mode access by said processing means (7) to said particular personalizing data (K_{SEAX}, K_{SEAY}, etc) by means of said specific personalizing access secret code (A_{PO}, NA_{PO}).

4. Device according to any of claims 1 to 3, **characterized in that** said inhibitor means are adapted to prohibit read mode access to said particular personalizing data (K_{SEAX}, K_{SEAY}, etc) following the loading of said data by means of said particular personalizing access secret codes (A_{PX}, A_{PY}, etc) assigned to said functions (X, Y, etc).

5. Device according to any of claims 1 to 3, **characterized in that** said inhibitor means are adapted to authorize read mode access to personalizing data (K_{SEAX}, K_{SEAY}, etc) particular to a function (X, Y, etc) by means of the particular personalizing access secret code (A_{PX}, A_{PY}, NA_{PX}, NA_{PY}, etc) assigned to said function.

6. Device according to any of claims 1 to 5, **characterized in that** said processing means (7) are adapted to authorize, by means of said specific personalizing access secret code (A_{PO}, NA_{PO}), the deletion of said particular secret data (K_{PERX}, K_{PERY}, etc) and of said particular personalizing data (K_{SEAX}, K_{SEAY}, etc) previously loaded into said storage means and the loading of new particular secret data (NK_{PERX}, NK_{PERY}, etc).

7. Device according to any of claims 1 to 6, **characterized in that** said specific personalizing access secret code (A_{PO}) is an access code for loading into said storage means personalizing data (person-param) common to all said functions (X, Y, etc) of the device.

8. Device according to any of claims 1 to 7, **characterized in that** it includes third means (7, 305) for loading into said storage means a reprogrammable specific secret datum (K_{PER}) representative of said specific personalizing access secret code (A_{PO}), said initialization means (7, 200-222) being adapted to authorize the replacement of said specific secret datum (K_{PER}) by a new specific secret datum (NK_{PER}) representative of a new specific personalizing access secret code (NA_{PO}) only in response to the application to said processing means (7) of the specific access secret code (A_{PO}) imaging said specific secret datum (K_{PER}) to be replaced.

9. Device according to claim 8, **characterized in that** said storage means include at least one non-volatile memory (8) in which a base secret key (K_{ROM}) is stored and said initialization means (7) include first means (7, 107) for calculating an initial value of said specific secret datum (K_{PER}) as a function of said base secret key (K_{ROM}) and an initial secret parameter (E(K_{PER}); E(K_{PEM})).

10. Device according to any of claims 1 to 9, **characterized in that** said secret datum (K_{PER}, NK_{PER}) is a secret key for calculating a code (A_{PC}; NA_{PC}) for verifying the specific personalizing access code (A_{PO}; NA_{PO}) of which said datum is representative.

11. Device according to claim 10, **characterized in that** said processing means (7) include second means for calculating said verification code (A_{PC}, A_{PX}, A_{PY}) by encrypting a variable by means of said calculation secret key (K_{PER}, K_{PERX}, K_{PERY}, etc).

12. Device according to any of claims 1 to 11, **characterized in that** said personalizing data includes at least one plurality of authentication secret keys (K_{SEAX}, K_{SEAY}) which are different from each other and each of which is assigned to one of said functions and **in that** said processing means (7) include third means for calculating an authentication code (A_{PEA}) vis-à-vis a verification unit (3) as a function of one of said authentication secret keys (K_{SEAX}, K_{SEAY}).

13. Method of initializing a device according to any of claims 1 to 12, **characterized in that** it includes:
- an initialization first step (100-110; 111-123) consisting in defining and storing in said storage means (9) a reprogrammable personalizing secret key (K_{PER}) specific to said device,
- a personalizing second step (201-222)consisting in loading into said storage means, by means of a specific personalizing access secret code (A_{PO}) dependent on said specific personalizing key (K_{PER}), personalizing data (person-param) common to said functions and particular reprogrammable secret keys (K_{PERX}, K_{PERY}) for calculating said particular personalizing access secret codes (A_{PX}, A_{PY}) each assigned to loading particular personalizing data relative to one of said functions (X, Y) and modifying said specific personalizing key (K_{PER}), and
- a personalizing third step (313) consisting in, for each of said functions (X, Y), loading the personalizing data (K_{SEAX}, K_{SEAY}) relating to said function into said storage means ' by means of the corresponding particular personalizing access secret code (A_{PX}, A_{PY}).

14. Method according to claim 13, **characterized in that** said third step includes a step consisting in, when loading particular personalizing data relative to at least one of said functions (X, Y), modifying said particular secret key (K_{PERX}, K_{PERY}) for calculating said particular access secret code (A_{PX}, A_{PY}) assigned to said function.

15. Method according to claim 13 or claim 14, **characterized in that** the initialization first step includes:
• at least one initialization first phase consisting in defining at least one secret datum (K_{PEM}; E(K_{PEM})) common to' a set of devices intended for the same entity,
• at least one second initialization phase including the steps of, for each device of said set:
a) reading a specific identification datum (NS) carried by said device,
b) calculating a first specific personalizing key (K_{PER}) as a function of said common secret datum (K_{PEM}; E(K_{PEM})) and said identification datum (NS),
c) storing said identification data (NS) and said first specific personalizing key (K_{PER}) in said storage means (9).

16. Method according to claim 15, **characterized in that** said personalizing second step includes the following steps, for each device of said set:
a) extracting (209) said specific identification datum (NS) from said device (2),
b) calculating (214) in a first external tool (30) said first specific personalizing key (K_{PER}) as a function of said common secret datum (K_{PEM}) and said specific identification datum (NS),
c) calculating (215) in said external tool (30) a first specific personalizing access secret code (A_{PO}) as a function of said specific personalizing key (K_{PER}) and a challenge transmitted by said device,
d) transmitting (217) from said first tool to said device (2) said first specific personalizing access secret code (A_{PO}) with personalizing parameters including a second specific personalizing key (NK_{PER}) different from said first specific personalizing key (K_{PER}),
e) calculating (219) in said system a code (A_{PC}) for verifying said first specific personalizing access secret code (A_{PO}) as a function of said first specific personalizing key (K_{PER}) and said challenge,
f) comparing (220) in said device said first specific personalizing access secret code (A_{PO}) and said verification code (A_{PC}) and, in response to a match of said codes:
g) storing (221) said personalizing parameters in said storage means (9), and
h) substituting (222) said second specific personalizing key (NK_{PER}) for said first specific personalizing key (K_{PER}) in said storage means (9).

17. Method according to claim 15 or claim 16, **characterized in that** said initializing first step includes a third phase consisting in initially storing a common base secret key (K_{ROM}) in a permanent memory (8) of said storage means and **in that** steps a) and b) of said initialization second phase consist in:
• applying said common secret datum (K_{PEM}) and said base key (K_{ROM}) to a second external tool (20),
• reading said identification datum (NS) by means of said second tool,
• calculating (100) said specific personalizing key (K_{PER}) by means of said second tool (20),
• encrypting (101) said specific personalizing key (K_{PER}) by means of said common base key (K_{ROM}) in said second external tool (20),
• transmitting (104) the result (E(K_{PER})) of said encryption from said second tool (20) to said device (2), and
• decrypting (107) said result (E(K_{PER})) in said system by means of said base key (K_{ROM}) to reconstitute said specific personalizing key (K_{PER}).

18. Method according to claim 15 or claim 16, **characterized in that** said initializing first step includes a third phase consisting in initially storing a common base key (K_{ROM}) in a permanent memory (8) of said storage means, **in that** said first phase equally consists in encrypting (111) said common secret datum (K_{PEM}) by means of said common base key (K_{ROM}) and applying the result of said encryption (E(K_{PEM})) to a second external tool (20), and **in that** said second phase equally consists in:
a) reading (115) said specific identification datum (NS) by means of said second tool (20) and transmitting said identification datum (NS) and the result of said encryption (E(K_{PEM})) to said device,
b) decrypting (119) said result (E(K_{PEM})) in said device (2) by means of said base key (K_{ROM}) to restore said common secret datum (K_{PEM}) and thereafter calculating (120) said specific personalizing key (K_{PER}).

19. Secure communication system **characterized in that** it includes a set of devices according to any of claims 1 to 12 and at least one tool (30) for initializing personalizing parameters for loading into each of said devices:
* personalizing data (person-param) common to the various functions (X, Y) of said device,
* said particular personalizing data (K_{SEAX}, K_{SEAY}, etc), and
* said particular secret data (K_{PERX}, K_{PERY}, etc).

20. Secure communication system according to claim 19, **characterized in that** it further includes a tool (20) for the initial loading into each of said devices of a reprogrammable secret datum (K_{PER}) specific to each device and representative of said specific secret personalizing access code (A_{PO}).

21. Secure communication system **characterized in that** it includes a set of devices according to claim 12 and at least one verification unit (3).
